# EUROPÄISCHE PATENTSCHRIFT

(11) **EP 1 548 357 B1**
(45) Veröffentlichungstag und Bekanntmachung des Hinweises auf die Patenterteilung: **23.01.2008**
(21) Anmeldenummer: 04012006.5
(22) Anmeldetag: 21.05.2004
(51) Int. Cl.: F21V 8/00, F21V 5/04, F21W 131/406, F21V 14/06, G02B 3/08

(54) **Stufenlinsenscheinwerfer**
Stepped lens projector
Projecteur avec une lentille à échelons

(30) Priorität: 22.12.2003 DE 10361116
(43) Veröffentlichungstag der Anmeldung: 29.06.2005
(73) Patentinhaber: Schott AG, 55122 Mainz (DE)
(72) Erfinder: Kittelmann, Rüdiger, 37574 Einbeck (DE); Wagener, Harry, 31061 Alfeld (DE)
(74) Vertreter: Herden, Andreas F.

(56) Entgegenhaltungen:
- EP-A- 1 167 868
- EP-A- 1 384 941
- DE-A1- 3 413 310
- DE-A1- 3 919 643
- DE-A1- 3 926 618
- US-A- 5 138 540
- US-A1- 2002 024 822
- US-A1- 2002 114 160
- US-A1- 2003 063 466
- US-B1- 6 499 862

## Beschreibung

Die Erfindung betrifft einen Stufenlinsenscheinwerfer, mit einstellbarem Öffnungswinkel des austretenden Lichtbündels, mit einem Reflektor, einer Lampe und mindestens einer Stufenlinse.

Die lichttechnisch relevanten Teile bei gewöhnlichen Stufenlinsenscheinwerfern umfassen in der Regel eine Lampe, eine Stufenlinse (Fresnellinse) und einen sphärischen Hilfsreflektor. Herkömmlich befindet sich die Lampenwendel im Wesentlichen unveränderlich im Kugelmittelpunkt des sphärischen Reflektors. Dadurch wird ein Teil des von der Lampe abgestrahlten Lichts in diese zurückreflektiert und die Lichtabstrahlung in den vorderen Halbraum unterstützt. Dieses nach vorn gerichtete Licht wird durch die Stufenlinse gebündelt. Der Grad der Lichtbündelung ist jedoch von dem Abstand zwischen der Stufenlinse und der Lampe abhängig. Befindet sich die Lampenwendel im Brennpunkt der Stufenlinse, so ergibt sich die engste Lichtbündelung. Dadurch wird ein quasiparalleler Strahlengang, auch Spot genannt, erhalten. Durch Verkürzung des Abstandes zwischen der Stufenlinse und der Lampe wird der Öffnungswinkel des austretenden Lichtbündels stetig vergrössert. Dadurch wird ein divergierender Strahlengang, welcher auch Flood genannt wird, erhalten.

Nachteilig an derartigen Scheinwerfern ist jedoch die schlechte Lichtausbeute insbesondere in deren Spotstellung, da hier nur ein verhältnismässig kleiner Raumwinkelbereich der Lampe durch die Stufenlinse erfasst wird. Ausserdem wirkt es sich nachteilig aus, dass das von dem sphärischen Reflektor reflektierte Licht zu einem grossen Teil die Lampenwendel selbst wieder trifft, dort absorbiert wird und die Lampenwendel zusätzlich aufheizt.

Aus der DE 39 19 643 A1 ist ein Scheinwerfer mit einem Reflektor, einer Blende und einer Stufenlinse bekannt. Mit dem Scheinwerfer wird durch eine Verstellung der Lichtquelle die Ausleuchtung verändert. Dadurch wird eine Helligkeitsänderung des Lichtes bewirkt. Eine Abstandsregulierung zwischen Scheitelpunkt und Reflektor und zwischen der Blende und dem Reflektor dient der Helligkeitsregulierung.

Aus der DE 34 13 310 A1 ist ein Scheinwerfer mit einer Lampe und einem Reflektor oder einer Lampe und einer Sammellinse bekannt. Der Scheinwerfer weist weiter eine Streuscheibe oder einen Spiegel auf, die beide im Winkel von 45° positioniert sind. Durch den Spiegel wird das Licht abgelenkt und durch die Streuscheibe wird das Licht gestreut. Durch Verschieben der Streuscheibe werden unterschiedliche Abstrahlwinkel des Lichtbündels erzeugt.

Die DE 101 13 385 C1 beschreibt einen Stufenlinsenscheinwerfer, bei welchem die Stufenlinse eine Sammellinse ist, deren lichtquellenseitiger Brennpunkt sich in Spotstellung in etwa im reflektorfernen Brennpunkt des ellipsoiden Reflektors befindet. Auf diese Weise wird die Lampe nicht durch rückreflektiertes Licht unnötig erhitzt. Ferner wird mit einer entsprechend aufwendig zu gestalteten Führung sowohl das Abstandsverhältnis zwischen Lampe und Reflektor als auch das Abstandsverhältnis zwischen Reflektor und Stufenlinse in Abhängigkeit voneinander eingestellt. Hierzu bedarf es jedoch zusätzlicher mechanischer Einrichtungen.

Mit zunehmender Verkleinerung der Lichtquelle, etwa bei Hochleistungs-Hochdruck-Entladungslampen kann jedoch im ausgeleuchteten Lichtfeld ein immer stärker ausgeprägter mittlerer dunkler Bereich auftreten, welcher mit streuenden Einrichtungen innerhalb des Reflektors nicht oder nur noch mit grossen Lichtverlusten kompensiert werden kann. Auch die herkömmlichen, zur Vermeidung einer Abbildung des Emissionszentrums der Lichtquelle verwendeten streuenden Einrichtungen schaffen hier nur bedingt, wenn überhaupt Abhilfe, da auch hierbei in jeder Stellung des Stufenlinsenscheinwerfers mindestens der dunkle mittige Öffnungskegel homogen ausgeleuchtet werden muss. Gerade hierdurch kommt es jedoch besonders in der Spotstellung zu grossen Lichtverlusten, da hier nur ein dunkler Bereich mit sehr kleinem Öffnungswinkel vorliegt aber bei den herkömmlichen Stufenlinsen mit streuenden Einrichtungen dennoch die volle Fläche der Stufenlinse zur Streuung des Lichtfelds verwendet wird.

Aus US2002/0024822 ist eine LCD-Beleuchtungsanordnung mit einer Stufenlinse (Fresnellinse) bekannt. Die Stufenlinse weist eine im Zentrum der Linse angeordnete lichtstreuende Oberfläche auf.

Mit der Erfindung soll ein Stufenlinsenscheinwerfer geschaffen werden, der bei hohem Wirkungsgrad ein homogen ausgeleuchtetes Lichtfeld bereitstellt. Ferner soll dieser Stufenlinsenscheinwerfer auch einfach und kostengünstig herzustellen sein.

Diese Aufgabe wird auf überraschend einfache Weise mit einem Stufenlinsenscheinwerfer gemäss Anspruch 1 sowie einem Beleuchtungsset gemäss Anspruch 17 gelöst.

Die Erfinder haben herausgefunden, dass diese hohen Lichtverluste auf überraschend einfache Weise mit einer Streuscheibe vermieden werden können.

Nach der Erfindung weist die Stufenlinse eine kreisförmig ausgebildete und nur noch im Zentrum der Stufenlinse angeordnete Streuscheibe auf.

Folglich können in jeder Stellung des Stufenlinsenscheinwerfers die dunklen Bereiche in der Mitte des Beleuchtungsfelds sehr wirksam vermieden werden, aber es kommt nicht mehr zu den hohen Lichtverlusten in der Spotstellung des Reflektors.

In überraschender Weise zeigt es sich, dass der geometrisch-optische Strahlengang des aus dem Reflektor austretenden Lichts am Ort der Stufenlinse genau dann einen kleineren Bereich ausleuchtet, wenn der benötigte Anteil an gestreutem Licht erhöht ist.

Diese Wirkung haben sich die Erfinder zu nutze gemacht, um mit der Erfindung ein automatisches oder adaptives Lichtmischsystem zu schaffen, welches synchron zu der Verstellung des Stufenlinsenscheinwerfers nur denjenigen Streulichtanteil zum geometrisch-optisch abgebildeten Licht hinzu mischt, welcher für diese Stellung benötigt wird.

Dieses Lichtmischverhältnis, welches nahezu optimal an die jeweils erforderlichen Lichtverteilungen adaptiert werden kann, wird nachfolgend abgekürzt nur noch als Mischverhältnis bezeichnet.

Durch dieses automatische Lichtmischsystem wird im Wesentlichen für jede Stellung des Reflektors das richtige Mischverhältnis und somit stets ein sehr homogen ausgeleuchtetes Lichtfeld geschaffen ohne dass hierbei jedoch unnötige Streuverluste auftreten.

Hierbei kann durch die Wahl des Durchmessers der Streuscheibe im Verhältnis zur verbleibenden Fläche der Stufenlinse das Mischverhältnis der vollflächig ausgeleuchteten Stufenlinse definiert werden und kann durch die Streueigenschaften der Stufenlinse der Öffnungswinkel des gestreuten Lichts definiert werden.

Ferner kann auf der integrierten Streuscheibe selbst die streuende Wirkung variieren, so dass beispielsweise in der Mitte der Streuscheibe stärker streuende Bereiche und an deren Rand weniger stark streuende Bereiche angeordnet sind. Hierdurch wird ein stärker fokussiertes Strahlenbündel zusätzlich noch aufgeweitet und es lassen sich dann extrem breite Ausleuchtungswinkel realisieren.

Alternativ kann auch der Rand der Streuscheibe nicht nur abrupt endend ausgestaltet sein sondern es kann dieser in dessen streuender Wirkung stetig abnehmend gestaltet sein und sich noch unter oder über der Stufenlinse erstrecken. Hierdurch lassen sich weitere Anpassungen an die stellungsabhängigen Mischverhältnisse vornehmen.

Die Streuscheibe kann bei den bevorzugten Ausführungsformen sowohl an der Lichteintritts- als auch an der Lichtaustrittseite angeordnet sein. Ferner besteht die vorteilhafte Möglichkeit, Streuscheiben an der Lichteintritts und an der Lichtaustrittsseite anzuordnen. Bei dieser letztgenannten Ausführungsform können auch verschieden streuende, beispielsweise örtlich verschieden streuende, Streuscheiben verwendet werden.

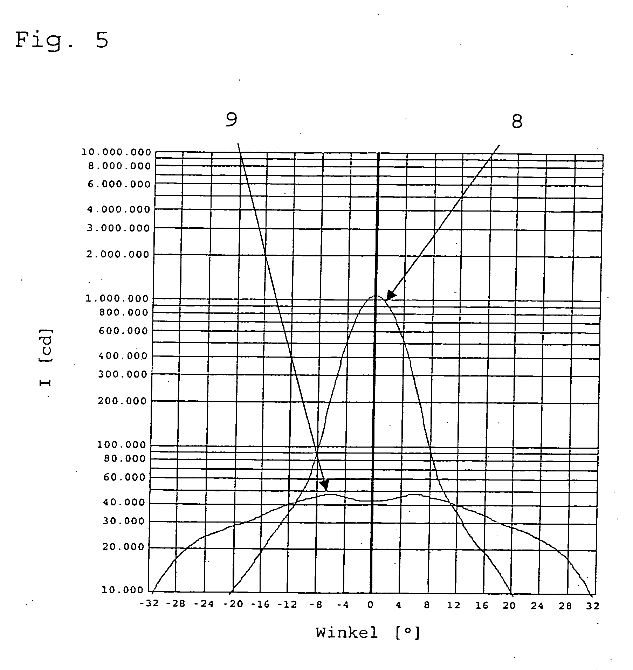

Gleichzeitig wird die Gleichmässigkeit der Beleuchtungsstärke im gesamten Lichtfeld erhalten, wie dieses beispielhaft in Figur 5 sowohl für die Spot- als auch für eine Floodstellung dargestellt ist.

Erfindungsgemäss ist ein ellipsoider Reflektor mit grosser Apertur vorgesehen. Die Spotstellung wird dadurch eingestellt, dass sich die Lampenwendel eines Schwarzkörperstrahlers, insbesondere einer Halogenlampe oder der Entladungsbogen einer Entladungslampe im reflektorseitigen Brennpunkt des Ellipsoids befindet und der reflektorferne zweite Brennpunkt des Ellipsoids in etwa im reellen reflektornahen Brennpunkt der Stufenlinse angeordnet ist.

Das von dem Reflektor reflektierte Licht wird vor Eintritt in die Stufenlinse nahezu vollständig auf den reflektorfernen Brennpunkt des Ellipsoids fokussiert. Die sich im reflektorseitigen Brennpunkt der Stufenlinse befindliche Lampenwendel oder der Entladungsbogen wird nach dem Hindurchtreten durch die Stufenlinse in das Unendliche abgebildet und wird somit deren Licht in ein nahezu paralleles Strahlenbündel überführt.

Bei zweckmässiger Wahl des Aperturwinkels von Reflektor und Stufenlinse wird das von dem Reflektor reflektierte Licht nahezu vollständig von der Stufenlinse erfasst und als enges Spot-Lichtbündel nach vorne abgestrahlt.

Eine Ausführungsform der Erfindung besteht darin, dass der Ellipsoidreflektor aus einem metallischen oder transparenten dielektrischen Material besteht. Bevorzugt werden als dielektrische Materialien Glas und polymere Materialien bzw. Kunststoffe verwendet, welche mit Metall, beispielsweise Aluminium, beschichtet sein können.

Alternativ oder zusätzlich wird zur Herstellung einer reflektierenden Oberfläche bei einer Ausführungsform mit transparentem dielektrischem Material eine der beiden oder beide Oberflächen des Reflektors mit einem System optisch dünner Schichten versehen. Vorteilhaft umfasst die Beschichtung der Stufenlinse ein dielektrisches Interferenz-Schichtsystem, welches das Spektrum des hindurchtretenden Lichtes verändert. Hierdurch können vorteilhafterweise sichtbare Strahlungsanteile reflektiert und die unsichtbaren Anteile, insbesondere Wärmestrahlungsanteile, durchgelassen werden.

Generell können sowohl der Reflektor, die Stufenlinse und/oder die Streuscheibe zumindest einseitig beschichtet sein, beispielsweise im Falle von Kunststoff mit einer Antikratz und/oder Antireflexschicht beschichtet sein.

Eine weitere bevorzugte Ausführungsform der Erfindung umfasst eine metallische Beschichtung auf einer oder beiden Hauptoberflächen des Reflektors.

In weiterer alternativer Ausgestaltung kann der Reflektor auch ein metallischer Reflektor welcher sowohl unbeschichtet als auch dielektrisch oder metallisch beschichtet sein kann, um die erwünschten spektralen und Korrosionseigenschaften bereitzustellen.

Eine bevorzugte Ausführungsform der Erfindung umfasst einen Stufenlinsenscheinwerfer, bei welchem die lichtreflektierende Oberfläche des Reflektors, vorzugsweise Teilflächen oder Facetten aufweisend, lichtstreuend strukturiert ist und keine, eine oder zwei Oberflächen der Stufenlinse lichtstreuend strukturiert sind. Hierdurch kommt es zu einem festgelegten Anteil der Überlagerung gestreuten Lichts zu geometrisch-optisch abgebildetem Licht, welcher dunkle Ringe im Lichtfeld mindern kann.

In vorteilhafter Weise ist die Stufenlinse an deren Oberfläche vorgespannt, vorzugsweise thermisch vorgespannt, um derart eine höhere Festigkeit und thermische Belastbarkeit aufzuweisen.

Erfindungsgemäss ist die Verwendung des Scheinwerfers für Architektur, Medizin, Film, Bühne, Studio und Fotografie sowie in einer Taschenlampe vorgesehen.

Die Streuscheibe kann bei den bevorzugten Ausführungsformen sowohl an der Lichteintritts- als auch an der Lichtaustrittseite angeordnet sein. Ferner besteht die vorteilhafte Möglichkeit, Streuscheiben an der Lichteintritts und an der Lichtaustrittsseite anzuordnen. Bei dieser letztgenannten Ausführungsform können auch verschieden streuende, beispielsweise örtlich verschieden streuende, Streuscheiben verwendet werden.

Die Erfindung wird anhand bevorzugter Ausführungsformen und unter Bezugnahme auf die beigefügten Zeichnungen detaillierter beschrieben.

Es zeigen:
- Fig. 1: eine Ausführungsform des Stufenlinsen-scheinwerfers in Spotstellung, wobei der reflektorferne Brennpunkt des Reflektors in etwa mit dem linksseitigen, reellen Brennpunkt der Stufenlinse überlagert ist,
- Fig. 2: die in Fig. 1 gezeigte Ausführungsform des Stufenlinsenscheinwerfers in einer ersten Floodstellung, wobei der reflektorferne Brennpunkt des Reflektors nahe einer Oberfläche der Stufenlinse angeordnet ist,
- Fig. 3: die in Fig. 1 dargestellte Ausführungsform des Stufenlinsenscheinwerfers in Spotstellung mit einem zusätzlichen Hilfsreflektor, mittels welchem ein weiterer Teil des Lichts zunächst in den Reflektor und von diesem in die Stufenlinse gelenkt wird,
- Fig. 4: eine sammelnde Stufenlinse mit zentral angeordneter Streuscheibe,
- Fig. 5: eine öffnungswinkelabhängige logarithmische Darstellung der Lichtstärke des Stufenlinsen-scheinwerfers in dessen Spot- und in einer von dessen Floodstellungen.

### Detaillierte Beschreibung bevorzugter Ausführungsformen

Bei der nachfolgenden detaillierten Beschreibung wird unterstellt, dass gleiche Bezugszeichen die gleichen oder gleich wirkende Elemente in den jeweiligen verschiedenen Ausführungsformen bezeichnen.

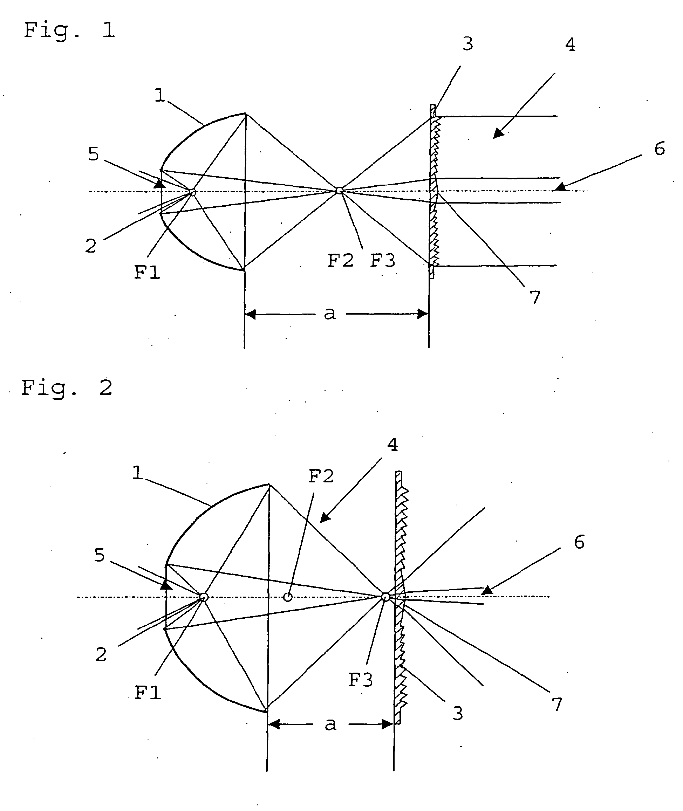

Nachfolgend wir auf Fig. 1 bezug genommen, welche eine Ausführungsform des Stufenlinsenscheinwerfers in Spotstellung zeigt. Der Stufenlinsenscheinwerfer enthält im Wesentlichen einen ellipsoiden Reflektor 1 , eine Lampe 2, welche eine Glühlampe, insbesondere Halogenlampe, ein Leuchtdiode, ein Leuchtdiodenfeld oder eine Gasentladunsglampe sein kann, und eine Stufenlinse 3, welche eine sammelnde Linse, vorzugsweise eine plankonvexe Stufenlinse ist.

In Fig. 1 ist der reflektorferne Brennpunkt F2 des ellipsoiden Reflektors 1 in etwa mit dem linksseitigen reellen oder positiven Brennpunkt F3 der Stufenlinse 3 überlagert.

Das aus dem Scheinwerfer austretende Lichtbündel 4 ist in den Figuren lediglich schematisch durch dessen äussere Randstrahlen angedeutet.

Der Abstand a zwischen Stufenlinse 3 und Vorderkante des Reflektors 1 ist ebenfalls in Fig. 1 dargestellt.

Die Spotstellung wird dadurch eingestellt, dass sich die Lampenwendel oder der Entladungsbogen der Lampe 2 im Wesentlichen im reflektorseitigen Brennpunkt F1 des Reflektorellipsoids 1 angeordnet wird.

Das von dem Reflektor 1 reflektierte Licht wird in dieser Stellung nahezu vollständig auf den reflektorfernen Brennpunkt F2 des Ellipsoids 1 gerichtet. Der linksseitige positive oder reelle Brennpunkt F3 der Stufenlinse 3 fällt dann in etwa mit dem Brennpunkt F2 des Reflektorellipsoids 1zusammen.

Es ist in Fig. 1 im Nahfeld auch zu erkennen, wie sich die Öffnung 5 innerhalb des Reflektors 2 im parallelen Strahlengang des Lichtfelds 4 als dunkler Bereich 6 auswirkt.

Innerhalb der Stufenlinse 3 ist eine kreisförmige, mittig angeordnete Streuscheibe 7 vorgesehen, welche ein definiertes Streulichtverhältnis und einen definierten Öffnungswinkel des gestreuten Lichts erzeugt. Hierdurch wird ein definiertes Mischverhältnis des gestreuten Lichts relativ zu dem durch die Stufenlinse 3 geometrisch-optisch abgebildeten Licht bereitgestellt.

Alternativ zu dieser Ausführungsform der Streuscheibe 7 ändert sich bei einer weiteren Ausführungsform die streuende Wirkung entlang des Radius der Streuscheibe 7 auf stetige Weise, so dass in der Mitte der Streuscheibe 7 stärker streuende Bereiche und an deren abrupt endendem Rand weniger stark streuende Bereiche angeordnet sind.

In nochmals weiterer alternativer Ausgestaltung ist der Rand der Streuscheibe 7 nicht nur abrupt endend sondern es ist dieser in dessen streuender Wirkung stetig abnehmend ausgebildet und kann sich dieser auch unter die oder über der Stufenlinse erstrecken.

Hierdurch werden systemabhängig weitere Anpassungen an die stellungsabhängigen Mischverhältnisse vorgenommen, so dass der Fachmann stets ein optimales Mischungsverhältnis für ein homogen ausgeleuchtetes Lichtfeld oder auch für Lichtfelder mit definiert erzeugten lokal höheren Intensitäten bereitstellen kann.

Es ist aus Fig. 1 ferner zu erkennen, dass in der Spotstellung nur ein geringer Teil des gesamten Lichts, durch die Streuscheibe 7 tritt.

Durch die Streuscheibe 7 kommt es zu einer sehr homogenen Ausleuchtung, wie dies in Fig. 5, welche eine öffnungswinkelabhängige logarithmische Darstellung der Lichtstärke des Stufenlinsenscheinwerfers zeigt, für die Spotstellung mit der Linie 8 wiedergegeben ist.

Fig. 2 zeigt die in Fig. 1 dargestellte Ausführungsform des Stufenlinsenscheinwerfers in einer ersten Floodstellung, bei welcher der reflektorferne Brennpunkt F2 des Reflektors 1 in etwa in einer reflektornahen Oberfläche der Stufenlinse 3 angeordnet ist.

Hierbei wird der Wert der Verschiebung a gegenüber der Spotstellung durch eine mechanische Führung definiert verändert.

Der Aufbau entspricht grundsätzlich dem in Fig. 1 erläuterten Aufbau des Stufenlinsenscheinwerfers.

Jedoch ist aus Fig. 2 deutlich zu erkennen, dass sowohl der Öffnungswinkel des austretenden Lichtstrahlenbündels 4 als auch der des dunklen Bereichs 6 zugenommen hat.

Da in dieser Stellung jedoch ein sehr hohe Anteil des Lichts nur auf einem sehr kleinen Bereich in der Mitte der Streuscheibe 7 auftrifft, kann gerade dieser Bereich so gestaltet werden, dass dessen Vorwärtsstreukeule in etwa den dunklen Bereich 6 im Fernfeld oder Fernbereich in gewünschter Weise kompensiert. Es sei auch auf Fig. 5 verwiesen, welche die Lichtverhältnisse mit der Linie 9. beispielhaft für eine Floodstellung wiedergibt.

Die Veränderung des Abstands a kann bei einer Ausführungsform von Hand erfolgen, wobei hierzu eine Achsialführung der optischen Komponenten verwendet werden kann.
Alternativ können die optischen Komponenten auch motorisch verfahren werden.

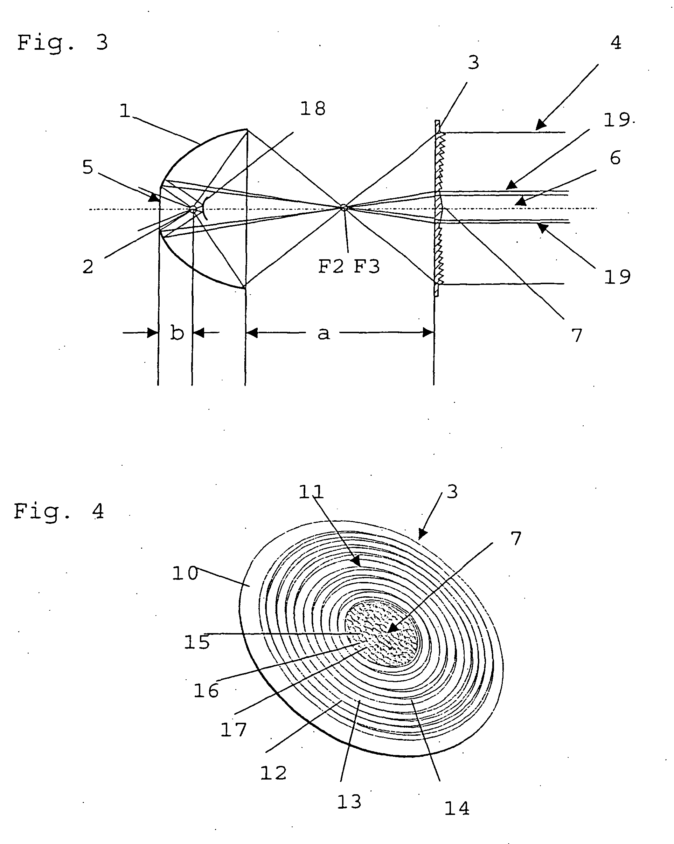

Eine weitere bevorzugte Ausführungsform zeigt Fig. 3. Bei dieser Ausführungsform, die bis auf einen zusätzlichen Hilfsreflektor 18 im wesentlichen den vorstehend beschriebenen Ausführungsformen entspricht, wird durch den Hilfsreflektor 18 Licht der Lampe 2, welches sich in Fig. 3 nach rechts ausbreiten würde und den Reflektor 1 nicht mehr erreichen würde durch Reflexion in den Reflektor 1 gelenkt. Hierdurch kann sowohl das Licht, welches nur beispielhaft durch den Strahlengang 19 dargestellt ist und ohne den Hilfsreflektor nicht zur Beleuchtung beitragen würde genutzt werden sondern es kann auch der ansonsten direkt in die Stufenlinse 3 eintretende Teil des Lichtes besser für die erwünschte Lichtverteilung genutzt werden.

Die Form des Hilfsreflektors 18 ist vorteilhaft so gewählt, dass an diesem reflektiertes Licht nicht wieder in das Leuchtmittel der Lampe 2, beispielsweise eine Wendel oder Entladungszone, eintritt und dieses zusätzlich unnötig erhitzt.

Alternativ kann der Hilfsreflektor 18 auf der Innen- und oder Aussenseite des Glaskörpers der Lampe 2 aufgebracht sein. Hierzu kann das Glas des Lampenkörpers entsprechend geformt sein, um die erwünschte Richtwirkung für das reflektierte Licht zu erreichen.
Fig. 4zeigt beispielhaft eine Stufenlinse 3 mit Streuscheibe 7, wie diese durch die Erfindung verwendet wird. Die Stufenlinse 3 verfügt über einen transparenten Grundkörper 10 sowie eine Stufenlinsenringsystem 11 mit ringförmigen Linsenabschnitten 11, 12, 13, innerhalb dessen die kreisförmige Streuscheibe 7 angeordnet ist.

Die Streuscheibe 7 ist definiert strukturiert oder verfügt über Facetten 15, 16, 17 mit in weiten Bereichen exakt definierbarem Streuverhalten, welche in der deutschen Patentanmeldung des selben Anmelders DE 103 43 630.8 mit dem Titel "Streuscheibe" beschrieben sind.

Die Erfindung ist jedoch nicht auf diese vorbeschriebenen Ausführungsformen von Streuscheiben beschränkt.

Besonders vorteilhaft findet der vorstehend beschriebene Stufenlinsenscheinwerfer seinen Einsatz in einem Beleuchtungsset zusammen mit einem gegenüber dem Stand der Technik wesentlich verkleinertem elektrischen Netzteil oder Vorschaltgerät. Dieses Netzteil kann bei gegenüber dem Stand der Technik gleicher nutzbarer Lichtleistung sowohl elektrisch als auch mechanisch kleiner gestaltet sein da der erfindungsgemässe Stufenlinsenscheinwerfer über eine wesentlich höhere Lichtausbeute verfügt. Somit wird weniger Gewicht benötigt und bei Transport und Lagerung geringerer Stauraum beansprucht.

Hierdurch wird aber auch, insbesondere bei Verwendung von Kaltlicht-Reflektoren die gesamte thermische Belastung der beleuchteten Personen und Gegenstände reduziert.

Ferner kann der erfindungsgemäße Stufenlinsenscheinwerfer zur Erhöhung der Lichtausbeute vorteilhaft auch in Taschenlampen verwendet werden.

### Bezugszeichenliste

- 1: Reflektor
- 2: Lampe
- 3: Stufenlinse
- 4: austretendes Lichtbündel
- 5: Öffnung im Reflektor 1
- 6: dunkler Bereich
- 7: Streuscheibe
- 8: Intensitätsverteilung in Spotstellung
- 9: Intensitätsverteilung in Floodstellung
- 10: Grundkörper
- 11: Stufenlinsenringsystem
- 12: ringförmige Linsenabschnitte
- 13: dto.
- 14: dto.
- 15: Facette
- 16: dto.
- 17: dto.
- 18: Hilfsreflektor
- 19: durch Hilfsreflektor reflektierter Strahlengang

## Patentansprüche

1. Stufenlinsenscheinwerfer mit verschiedenen Stellungen und somit einstellbarem Öffnungswinkel des austretenden Lichtbündels mit einem, vorzugsweise ellipsoiden Reflektor, einer Lampe und mindestens einer Stufenlinse,
**dadurch gekennzeichnet,**
**dass** die Stufenlinse eine kreisförmig ausgebildete und nur im Zentrum der Stufenlinse angeordnete Streuscheibe aufweist, sodaß in jeder Stellung des Stufenlinsenscheinwerfers dunkele Bereiche in der Mitte des Beleuchtungsfelds vermieden werden.

2. Stufenlinsenscheinwerfer nach Anspruch 1, **dadurch gekennzeichnet,**
**dass** die Stufenlinse mit der Streuscheibe ein Lichtmischsystem definiert, welches den Anteil des gestreuten Lichts relativ zum dem Anteil des geometrisch-optisch abgebildeten Lichts, somit das Lichtmischverhältnis, in Abhängigkeit von der Stellung des Stufenlinsenscheinwerfers verändert.

3. Stufenlinsenscheinwerfer nach Anspruch 1oder 2 **dadurch gekennzeichnet, dass** die Stufenlinse einen reellen Brennpunkt aufweist, welcher mit einem reflektorfernen Brennpunkt des Reflektors, insbesondere in Spotstellung des Stufenlinsenscheinwerfers, überlagerbar ist.

4. Stufenlinsenscheinwerfer nach einem der vorstehenden Ansprüche, **dadurch gekennzeichnet, dass** die Stufenlinse eine als Stufenlinse ausgebildete, vorzugsweise plankonvexe Sammellinse ist.

5. Stufenlinsenscheinwerfer nach einem der vorstehenden Ansprüche, **dadurch gekennzeichnet, dass** die Stufenlinse eine Doppellinse mit chromatisch korrigierten Abbildungseigenschaften umfasst.

6. Stufenlinsenscheinwerfer nach einem der vorstehenden Ansprüche, **dadurch gekennzeichnet, dass** der Reflektor aus einem metallischen oder transparenten, vorzugsweise dielektrischen Material, Glas und/oder Kunststoff besteht.

7. Stufenlinsenscheinwerfer nach einem der vorstehenden Ansprüche, bei welchem mindestens eine der beiden Hauptoberflächen des Reflektors mit einem System optisch dünner Schichten versehen ist.

8. Stufenlinsenscheinwerfer nach einem der vorstehenden Ansprüche, bei welchem die lichtreflektierende Oberfläche des Reflektors, vorzugsweise Teilflächen oder Facetten aufweisend, lichtstreuend strukturiert ist und keine, eine oder zwei Oberflächen der Stufenlinse zusätzlich zur Streuscheibe lichtstreuend strukturiert sind.

9. Stufenlinsenscheinwerfer nach einem der vorstehenden Ansprüche, **dadurch gekennzeichnet, dass** der Reflektor, die Stufenlinse und/oder die Streuscheibe zumindest einseitig beschichtet sind.

10. Stufenlinsenscheinwerfer nach Anspruch 9, **dadurch gekennzeichnet, dass** die Beschichtung der Stufenlinse ein dielektrisches Interferenz-Schichtsystem umfasst, welches das Spektrum des hindurchtretenden Lichtes verändert.

11. Stufenlinsenscheinwerfer nach einem der vorstehenden Ansprüche, **dadurch gekennzeichnet, dass** mindestens eine der beiden Hauptoberflächen des Reflektors mit Metall, vorzugsweise Aluminium, beschichtet ist.

12. Stufenlinsenscheinwerfer nach einem der vorstehenden Ansprüche, **dadurch gekennzeichnet, dass** die Lampe eine Glühlampe, insbesondere Halogenlampe, ein Leuchtdiode, ein Leuchtdiodenfeld oder eine Gasentladunsglampe ist.

13. Stufenlinsenscheinwerfer nach einem der vorstehenden Ansprüche, **dadurch gekennzeichnet, dass** ein Hilfsreflektor zwischen Stufenlinse und Reflektor angeordnet ist.

14. Stufenlinsenscheinwerfer nach einem der vorstehenden Ansprüche, **dadurch gekennzeichnet, dass** die Stufenlinse an deren Oberfläche vorgespannt, vorzugsweise thermisch vorgespannt ist.

15. Beleuchtungsset umfassend einen Stufenlinsenscheinwerfer nach einem der vorstehenden Ansprüche 1 bis 14 sowie ein zugeordnetes elektrisches Netzteil oder Vorschaltgerät.

16. Verwendung des Stufenlinsenscheinwerfers nach einem der Ansprüche 1 bis 14 sowie eines Beleuchtungssets nach Anspruch 15 für Medizin, Architektur, Film, Bühne, Studio und Fotografie.

17. Taschenlampe umfassend eine Stufenlinsenscheinwerfer nach einem der vorstehenden Ansprüche 1 bis 14.

## Claims

1. Stepped lens spotlight having various positions and thus an adjustable aperture angle of the emergent light bundle, having a preferably ellipsoidal reflector, a lamp and at least one stepped lens,
**characterised in that**
the stepped lens comprises a circularly formed diffusing screen which is disposed only in the centre of the stepped lens, so that in each position of the stepped lens spotlight dark regions in the middle of the illumination field are avoided.

2. Stepped lens spotlight according to claim 1,
**characterised in that**
the stepped lens defines, with the diffusing screen, a light mixing system which changes the proportion of the diffused light relative to the proportion of the geometrically optically reflected light, thus the light mixing ratio, in dependence upon the position of the stepped lens spotlight.

3. Stepped lens spotlight according to claim 1 or 2, **characterised in that** the stepped lens has an actual focal point, over which a reflector-remote focal point of the reflector can be placed, particularly in the spot position of the stepped lens spotlight.

4. Stepped lens spotlight according to one of the preceding claims, **characterised in that** the stepped lens is a, preferably planar, convex lens formed as a stepped lens.

5. Stepped lens spotlight according to one of the preceding claims, **characterised in that** the stepped lens includes a double lens with chromatically corrected reflection properties.

6. Stepped lens spotlight according to one of the preceding claims, **characterised in that** the reflector consists of a metal or transparent, preferably dielectric material, glass and / or synthetic material.

7. Stepped lens spotlight according to one of the preceding claims, wherein at least one of the two main surfaces of the reflector is provided with a system of optically thin layers.

8. Stepped lens spotlight according to one of the preceding claims, wherein the light-reflecting surface of the reflector, preferably comprising partial surfaces or facets, is preferably structured so as to diffuse light, and either no surfaces or one or two surfaces of the stepped lens are structured so as to diffuse light in addition to the diffusing screen.

9. Stepped lens spotlight according to one of the preceding claims, **characterised in that** the reflector, the stepped lens and / or the diffusing screen are coated on at least one side.

10. Stepped lens spotlight according to claim 9, **characterised in that** the coating of the stepped lens includes a dielectric interference layer system which changes the spectrum of the light passing through.

11. Stepped lens spotlight according to one of the preceding claims, **characterised in that** at least one of the two main surfaces of the reflector is coated with metal, preferably aluminium.

12. Stepped lens spotlight according to one of the preceding claims, **characterised in that** the lamp is an incandescent lamp, particularly a halogen lamp, a light emitting diode, a light emitting diode field or a gas discharge lamp.

13. Stepped lens spotlight according to one of the preceding claims, **characterised in that** an auxiliary reflector is disposed between the stepped lens and the reflector.

14. Stepped lens spotlight according to one of the preceding claims, **characterised in that** the stepped lens is prestressed on its surface, preferably thermally prestressed.

15. Illumination arrangement including a stepped lens spotlight according to one of the preceding claims 1 to 14 and also an associated electrical network part or connection device.

16. Use of the stepped lens spotlight according to one of the claims 1 to 14 and also an illumination arrangement according to claim 15 for medicine, architecture, film, stage, studio and photography.

17. Pocket lamp including a stepped lens spotlight according to one of the preceding claims 1 to 14.

## Revendications

1. Projecteur à lentille de Fresnel à différentes positions et, par conséquent, à angle d'ouverture réglable du faisceau lumineux émergent, comportant un réflecteur de préférence ellipsoïdal, une lampe et au moins une lentille de Fresnel, **caractérisé en ce que** la lentille de Fresnel présente un diffuseur de forme circulaire et disposé uniquement au centre de la lentille de Fresnel de telle manière que, dans chaque position du projecteur à lentille de Fresnel, des zones sombres puissent être évitées au milieu du champ d'éclairage.

2. Projecteur à lentille de Fresnel selon la revendication 1, **caractérisé en ce que** la lentille de Fresnel définit avec le diffuseur un système de mélange de lumière qui modifie, en fonction de la position du projecteur à lentille de Fresnel, la fraction de lumière diffusée par rapport à la fraction de lumière formant une image de manière optique géométrique et, par conséquent, le rapport de mélange de lumière.

3. Projecteur à lentille de Fresnel selon la revendication 1 ou 2, **caractérisé en ce que** la lentille de Fresnel présente un foyer réel qui est superposable à un foyer distant du réflecteur, notamment dans la position spot du projecteur à lentille de Fresnel.

4. Projecteur à lentille de Fresnel selon l'une des revendications précédentes, **caractérisé en ce que** la lentille de Fresnel est une lentille convergente, de préférence de forme plan-convexe, réalisée en tant que lentille de Fresnel.

5. Projecteur à lentille de Fresnel selon l'une des revendications précédentes, **caractérisé en ce que** la lentille de Fresnel comprend une lentille double présentant des propriétés de formation d'image corrigées de façon chromatique.

6. Projecteur à lentille de Fresnel selon l'une des revendications précédentes, **caractérisé en ce que** le réflecteur consiste en une matière métallique ou transparente, de préférence diélectrique, en verre et/ou en matière plastique.

7. Projecteur à lentille de Fresnel selon l'une des revendications précédentes, dans lequel au moins l'une des deux surfaces principales du réflecteur est pourvue d'un système de couches translucides.

8. Projecteur à lentille de Fresnel selon l'une des revendications précédentes, dans lequel la surface de réflexion de lumière du réflecteur, de préférence présentant des surfaces partielles ou des facettes, est structurée de manière à diffuser la lumière, et aucune, une ou bien deux surface(s) de la lentille de Fresnel est ou sont structurée(s) pour diffuser la lumière, en plus du diffuseur.

9. Projecteur à lentille de Fresnel selon l'une des revendications précédentes, **caractérisé en ce que** le réflecteur, la lentille de Fresnel et/ou le diffuseur sont revêtus d'une couche au moins sur une face.

10. Projecteur à lentille de Fresnel selon la revendication 9, **caractérisé en ce que** le revêtement de la lentille de Fresnel comprend un système diélectrique de couches d'interférence, qui modifie le spectre de la lumière traversante.

11. Projecteur à lentille de Fresnel selon l'une des revendications précédentes, **caractérisé en ce qu'**au moins l'une des deux surfaces principales du réflecteur est revêtue d'une couche de métal, de préférence de l'aluminium.

12. Projecteur à lentille de Fresnel selon l'une des revendications précédentes, **caractérisé en ce que** la lampe est une lampe à incandescence, notamment une lampe à halogène, une diode luminescente, un groupe de diodes luminescentes, ou une lampe à décharge dans un gaz.

13. Projecteur à lentille de Fresnel selon l'une des revendications précédentes, **caractérisé en ce qu'**il est prévu un réflecteur auxiliaire entre la lentille de Fresnel et le réflecteur.

14. Projecteur à lentille de Fresnel selon l'une des revendications précédentes, **caractérisé en ce que** la lentille de Fresnel est soumise à une précontrainte au niveau de sa surface, de préférence une précontrainte par voie thermique.

15. Ensemble d'éclairage comprenant un projecteur à lentille de Fresnel selon l'une des revendications précédentes 1 à 14, ainsi qu'un bloc associé d'alimentation électrique réseau, ou un ballast.

16. Utilisation du projecteur à lentille de Fresnel selon l'une des revendications 1 à 14, ainsi que d'un ensemble d'éclairage selon la revendication 15 dans les domaines de la médecine, de l'architecture, du cinéma, de la scène, des studios et de la photographie.

17. Lampe de poche comprenant un projecteur à lentille de Fresnel selon l'une des revendications précédentes 1 à 14.
